# EUROPÄISCHE PATENTSCHRIFT

(11) **EP 3 267 272 B1**
(45) Veröffentlichungstag und Bekanntmachung des Hinweises auf die Patenterteilung: **10.06.2020**
(21) Anmeldenummer: 17168409.5
(22) Anmeldetag: 27.04.2017
(51) Int. Cl.: G05B 19/05, G05B 19/418, G05B 19/414

(54) **VORRICHTUNG UND VERFAHREN ZUR DATENÜBERTRAGUNG**
METHOD AND DEVICE FOR DATA TRANSMISSION
PROCÉDÉ ET DISPOSITIF DE TRANSMISSION DE DONNÉES

(30) Priorität: 04.07.2016 DE 102016212115
(43) Veröffentlichungstag der Anmeldung: 10.01.2018
(73) Patentinhaber: Dr. Johannes Heidenhain GmbH, 83301 Traunreut (DE)
(72) Erfinder: JOACHIMSTHALER, Ingo, 83278 Traunstein (DE)

(56) Entgegenhaltungen:
- EP-A1- 0 147 480
- EP-A1- 0 332 710
- WO-A2-2004/072923
- DE-A1- 4 008 559

## Beschreibung

### GEBIET DER TECHNIK

Die vorliegende Erfindung betrifft eine Vorrichtung zur Datenübertragung gemäß Anspruch 1, sowie ein korrespondierendes Verfahren nach Anspruch 7. Darüber hinaus betrifft die Erfindung ein Datenübertragungssystem mit einer erfindungsgemäßen Vorrichtung zur Datenübertragung.

Erfindungsgemäße Vorrichtungen sind insbesondere in der Automatisierungstechnik einsetzbar, wenn Positionsmesseinrichtungen, numerische Steuerungen und speicherprogrammierbare Steuerungen in Kombination betrieben werden.

### STAND DER TECHNIK

In der Automatisierungstechnik kommen häufig elektrische Antriebe zum Einsatz, die von einer numerischen Steuerung (NC) angesteuert werden. Typische Einsatzgebiete für derartige Antriebe sind numerisch gesteuerte Werkzeugmaschinen mit bis zu fünf Bearbeitungsachsen. Als grundlegende Information für Regelkreise zur Kontrolle der Antriebe benötigt die numerische Steuerung kontinuierlich Positionsistwerte, um neue Sollwerte errechnen zu können. Die Positionswerte liefern Positionsmesseinrichtungen, wie zum Beispiel Drehgeber, die direkt an einen Motor angebaut sind und die Winkelposition der Motorwelle messen. Für die Übertragung absoluter Positionswerte zur numerischen Steuerung sind meist schnelle serielle Schnittstellen vorgesehen. Die Abfrage von Positionswerten und deren Übertragung erfolgt hochzyklisch und zeitlich determiniert, d.h. die numerische Steuerung fordert in konstanten Zeitintervallen Positionswerte an und die Zeitdauer für die Bereitstellung und das Senden von Positionswerten nach Eintreffen eines entsprechenden Positionsanforderungsbefehls ist stets gleich. Dieses Zeitverhalten des Datenübertragungssystems numerische Steuerung - Positionsmesseinrichtung bestimmt maßgeblich die Qualität der einer Antriebsregelung.

Parallel zu den numerischen Steuerungen kommen oft speicherprogrammierbare Steuerungen (SPS; PLC) zum Einsatz. Diese erledigen Schalt- und Überwachungsaufgaben, wie beispielsweise das Ein- und Ausschalten von Kühlmittelpumpen, Steuern von Werkzeugwechslern, Überwachen des Schließzustands von Schutztüren, Überwachung und Kompensation von Maschinenzuständen (Vibrationen, temperaturbedingte Ausdehnung) und vieles anderes mehr.

Für die Ausführung dieser Aufgaben benötigt die speicherprogrammierbare Steuerung Informationen, die an verschiedensten Stellen in und um die betreffende Anlage der Automatisierungstechnik (z.B. der Werkzeugmaschine) gewonnen werden, beispielsweise mittels Sensoren (Temperatursensoren, Vibrationssensoren, Sensoren zum Feststellen eines Schließzustands, ...). Auch hier erfolgt die Übertragung der diversen Informationen häufig über serielle Schnittstellen. Anders als bei der Abfrage von Positionswerten, bei der eine Reaktionszeit von wenigen Mikrosekunden erwartet wird, ist die Abfrage von Sensorwerten vergleichsweise zeitunkritisch. So können für die Abfrage von Sensoren Reaktionszeiten im Bereich von Millisekunden toleriert werden. Auch eine zeitliche Kopplung zwischen Anforderung, Bereitstellung und Übertragung von Sensorwerten ist nicht zwingend notwendig. Dementsprechend können hier Schnittstellen mit geringer Übertragungsrate zum Einsatz kommen, häufig werden auch Feldbusse (z.B. CAN-Bus, PROFINET, PROFIBUS,...) eingesetzt, bei denen viele Sensoren über eine Schnittstelle der speicherprogrammierbaren Steuerung abgefragt werden können.

Insgesamt bedeutet die getrennte Übertragung von Positionsdaten zur numerischen Steuerung und von Zusatzdaten (Sensordaten) zur speicherprogrammierbaren Steuerung eine unerwünscht hohe Anzahl von Datenleitungen, die von der Anlage (der Werkzeugmaschine) zu den Steuerungen geführt werden müssen.

Da es häufig vorkommt, dass Sensordaten in räumlicher Nähe von Positionsmesseinrichtungen gewonnen werden, oder sogar Sensoren in Positionsmesseinrichtungen angeordnet sind, wurden serielle Schnittstellen geschaffen, die die Möglichkeit bieten, neben den Positionswerten auch Zusatzinformationen, wie beispielsweise Sensordaten zur numerischen Steuerung zu übertragen.

So beschreibt die EP 0 660 209 A1 eine Positionsmesseinrichtung mit einer seriellen Schnittstelle, die es, gesteuert von Befehlen, erlaubt, entweder Positionswerte, oder Zusatzinformationen zu einer Folgeelektronik zu übertragen.

Die DE 10 2013 209 019 A1 beschreibt eine Positionsmesseinrichtung, die in der Lage ist, als Reaktion auf einen Anforderungsbefehl sowohl Daten mit hoher Priorität (Positionswerte), als auch Daten mit niedriger Priorität (Zusatzinformationen) über eine serielle Schnittstelle zu einer Folgeelektronik zu übertragen.

Die WO 2004/072923 A2 zeigt eine elektronische Zwischenbaugruppe, die zur Erfassung von Daten mindestens einer Peripherieeinheit und zur Übermittlung der erfassten Daten an eine Positionsmesseinrichtung geeignet ist.

Damit stehen die Zusatzinformationen zwar der numerischen Steuerung zur Verfügung, nicht aber der speicherprogrammierbaren Steuerung. Eine Möglichkeit zur Weiterleitung der Zusatzinformationen von der numerischen Steuerung an die speicherprogrammierbare Steuerung ist meist nicht vorhanden. Zudem sind derartige Schnittstellen bei älteren numerischen Steuerungen oft nicht verfügbar.

### ZUSAMMENFASSUNG DER ERFINDUNG

Es ist Aufgabe der vorliegenden Erfindung, eine Vorrichtung zur Datenübertragung zu schaffen, die die Datenübertragungssysteme bestehend aus Komponenten mit unterschiedlichen zeitlichen Anforderungen vereinfacht.

Diese Aufgabe wird gelöst durch eine Vorrichtung zur Datenübertragung nach Anspruch 1. Vorteilhafte Ausgestaltungen einer erfindungsgemäßen Vorrichtung ergeben sich aus den von Anspruch 1 abhängigen Ansprüchen.

Weiter ist es Aufgabe der vorliegenden Erfindung, ein Verfahren anzugeben, das die Datenübertragung bei Datenübertragungssystemen bestehend aus Komponenten mit unterschiedlichen zeitlichen Anforderungen vereinfacht. Diese Aufgabe wird gelöst durch eine Vorrichtung zur Datenübertragung nach Anspruch 7. Vorteilhafte Details eines erfindungsgemäßen Verfahrens ergeben sich aus den von Anspruch 7 abhängigen Ansprüchen.

Weitere Vorteile, sowie Einzelheiten der vorliegenden Erfindung ergeben sich aus den nachfolgend anhand der Figuren beschriebenen Ausführungsbeispielen.

### KURZE BESCHREIBUNG DER ZEICHNUNGEN

Es zeigt
- Figur 1: ein Blockdiagramm eines Datenübertragungssystems mit einer erfindungsgemäßen Vorrichtung,
- Figur 2: ein Blockdiagramm einer ersten Ausführungsform einer erfindungsgemäßen Vorrichtung,
- Figur 3: ein Daten-Zeit-Diagramm zur in Figur 2 dargestellten Ausführungsform,
- Figur 4: ein Blockdiagramm einer weiteren Ausführungsform einer erfindungsgemäßen Vorrichtung,
- Figur 5: ein Daten-Zeit-Diagramm zur in Figur 4 dargestellten Ausführungsform,
- Figur 6: ein Blockdiagramm einer weiteren Ausführungsform einer erfindungsgemäßen Vorrichtung,
- Figur 7: ein Daten-Zeit-Diagramm zur in Figur 6 dargestellten Ausführungsform,

### BESCHREIBUNG DER AUSFÜHRUNGSFORMEN

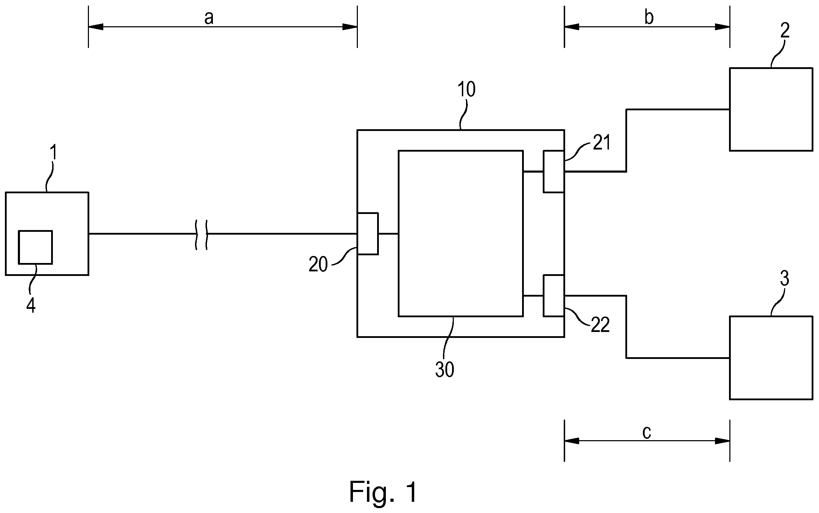

Figur 1 zeigt ein Blockdiagramm eines Datenübertragungssystems mit einer erfindungsgemäßen Vorrichtung 10. Es zeigt die Vorrichtung 10 in Verbindung mit einer Positionsmesseinrichtung 1, einer Steuerungseinheit 2 und einer Zusatzeinheit 3. Die Vorrichtung 10 weist geeignete Schnittstellen auf, über die diese Komponenten anschließbar sind. So ist eine Messgeräteschnittstelle 20 für den Anschluss der Positionsmesseinrichtung 1 vorgesehen, eine Steuerungsschnittstelle 21 zum Anschluss an die Steuerungseinheit 2, sowie eine Zusatzschnittstelle 22, über die die Verbindung zur Zusatzeinheit 3 hergestellt ist.
Die Messgeräteschnittstelle 20 ist geeignet ausgestaltet, um Datenpakete mit Antwortdaten von der Positionsmesseinrichtung 1 zu empfangen, die einen Positionswert und wenigstens einen Zusatzdatenwert umfassen. Sie ist mit Vorteil bidirektional ausgeführt, so dass Befehle (insbesondere Datenanforderungsbefehle) und ggf. auch Daten zur Positionsmesseinrichtung 1 übertragbar sind.

Zusatzdatenwerte können beispielsweise Messdaten eines Sensors 4 sein, der in der Positionsmesseinrichtung 1 angeordnet ist. Typische Vertreter derartiger Sensoren 4 sind Temperatursensoren oder Beschleunigungssensoren. Der Sensor 4 muss aber sich nicht zwingend innerhalb von der Positionsmesseinrichtung 1 befinden, er kann auch außerhalb davon angeordnet und über eine analoge oder digitale Schnittstelle an sie angeschlossen sein. Zusatzdatenwerte können aber auch andere Daten umfassen, wie beispielsweise Speicherinhalte, Diagnoseinformationen, etc.

Die Steuerungsschnittstelle 21 ist geeignet ausgestaltet, um Datenpakete, die wenigstens einen Positionswert umfassen, zur Steuerungseinheit 2 zu übertragen. Auch die Steuerungsschnittstelle 21 ist vorteilhafterweise bidirektional ausgeführt, so das Befehle (insbesondere Datenanforderungsbefehle) und ggf. Daten von der Steuerungseinheit 2 empfangbar sind.

Die Zusatzschnittstelle 22 ist schließlich derart ausgestaltet, das die Zusatzdatenwerte, die in Datenpaketen von der Positionsmesseinrichtung 1 enthalten sind, zur Zusatzeinheit 3 übertragbar sind. Auch hier ist die Schnittstelle bevorzugt bidirektional ausgeführt, so dass eine Übertragung der Zusatzdatenwerte zur Zusatzeinheit 3 nur auf einen entsprechenden Anforderungsbefehl hin erfolgt. Ist das der Fall, so werden von der Positionsmesseinrichtung 1 eintreffende Zusatzdatenwerte in der Vorrichtung 10 gespeichert und die gespeicherten Zusatzdatenwerte auf einen Anforderungsbefehl hin zur Zusatzeinheit 3 übertragen.

Die Schnittstellen 20, 21, 22 sind mit Vorteil serielle Schnittstellen, bei denen die Datenübertragung in Form von seriellen Datenpaketen erfolgt. Der Aufbau der Datenpakete ist schnittstellenspezifisch. Meist wird die Datenübertragung mit einer Startsequenz eingeleitet, anschließend wird die eigentliche Nutzinformation, also die zu übertragenden Daten, bzw. Befehle, übertragen und schließlich die Übertragung durch eine Endsequenz abgeschlossen. Für die vorliegende Erfindung ist lediglich relevant, dass Daten und ggf. Befehle übertragen werden, nicht aber die Art und Weise, wie die physikalische Übertragung tatsächlich erfolgt.

Die erfindungsgemäße Vorrichtung 10 umfasst weiter eine Kommunikationseinheit 30, die den Datenaustausch zwischen den Schnittstellen 20, 21, 22 kontrolliert. Insbesondere ist die Kommunikationseinheit 30 geeignet ausgestaltet, um Datenpakete mit Positionswerten und Zusatzdatenwerten, die über die Messgeräteschnittstelle 20 von der Positionsmesseinrichtung 1 eintreffen, zu verarbeiten, verarbeitete Positionswerte über die Steuerungsschnittstelle 21 an die Steuerungseinheit 2 auszugeben, sowie verarbeitete Zusatzdatenwerte zur Ausgabe an die Zusatzeinheit 3 über die Zusatzschnittstelle 22 bereitzustellen. Die Verarbeitung kann einfach darin bestehen den Positionswert oder den Zusatzdatenwert aus dem Datenpaket zu entnehmen und den Positionswert an die Steuerungseinheit weiterzuleiten, bzw. den Zusatzdatenwert zu speichern, so dass er für eine spätere Ausgabe zur Verfügung steht. Die Verarbeitung kann aber auch die Umwandlung in ein anderes Datenformat, Änderung der Skalierung, Extrapolation etc. umfassen.

Bezogen auf den Verkabelungsaufwand einer Anlage ist der Einsatz einer erfindungsgemäßen Vorrichtung 10 umso vorteilhafter, je näher die Vorrichtung an der Steuerungseinheit 2 (z.B. der numerischen Steuerung) und der Zusatzeinheit 3 (z.B. der speicherprogrammierbaren Steuerung) angeordnet ist. Dadurch wird die Leitungslänge a zwischen der Positionsmesseinrichtung 1 und der Vorrichtung 10, also die Datenübertragungsstrecke, über die Positionswerte und Zusatzdaten gemeinsam übertragen werden, maximal, während die Leitungslängen b und c, über die Positionswerte zur Steuerungseinheit 2 und Zusatzdaten zur Zusatzeinheit 3 übertragen werden müssen, minimal werden. In der Praxis bedeutet das für die Leitungslänge a eine Kabellänge von mehreren Metern bis zu einigen zehn Metern, während die Kabellängen b, bzw. c auf weniger als einen Meter reduziert werden können. Dies kann beispielsweise erreicht werden, indem die Vorrichtung 10, die Steuerungseinheit 2 und die Zusatzeinheit 3 innerhalb eines gemeinsamen Schaltschranks angeordnet werden. Der Einsatz nur eines Kabels für die Strecke a senkt im Übrigen nicht nur die Kosten für das Kabel selbst, auch der mechanische Aufwand für die Kabelführung, besonders wenn dieses über bewegliche Maschinenkomponenten hinweg geführt werden muss, verringert sich.

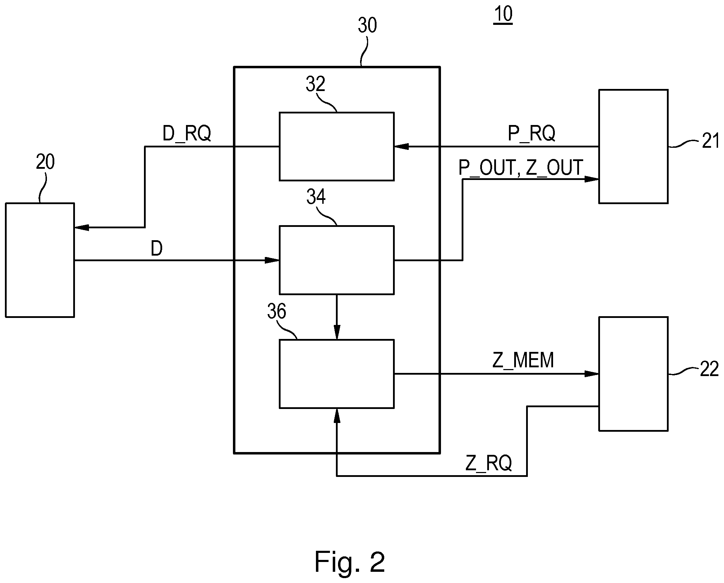

Vorteilhafte Ausführungsformen der Kommunikationseinheit 30 werden im Folgenden anhand der Figuren 2 bis 7 beschrieben.

Figur 2 zeigt ein Blockdiagramm einer ersten Ausführungsform einer erfindungsgemäßen Vorrichtung 10 mit einer Messgeräteschnittstelle 20, einer Steuerungsschnittstelle 21, einer Zusatzschnittstelle 22 und einer Kommunikationseinheit 30, die in diesem Beispiel eine Datenanforderungseinheit 32, eine Verarbeitungseinheit 34 und eine Speichereinheit 36 umfasst.

Die Messgeräteschnittstelle 20 ist geeignet ausgestaltet, um wenigstens einen Datenanforderungsbefehl D_RQ zur Positionsmesseinrichtung 1 zu senden, der ein Datenpaket mit einem Positionswert P und wenigstens einem Zusatzdatenwert Z von der Positionsmesseinrichtung 1 anfordert.

Die Steuerungsschnittstelle 21 ist so ausgestaltet, dass sie von der Steuerungseinheit 2 wenigstens einen Positionsanforderungsbefehl P_RQ empfangen und als Folge des Empfangs dieses Positionsanforderungsbefehls P_RQ einen in der Kommunikationseinheit 30 verarbeiteten Positionswert P_OUT an die Steuerungseinheit 2 senden kann.

Optional können zusätzlich zum verarbeiteten Positionswert P_OUT auch in der Kommunikationseinheit verarbeitete Zusatzdatenwerte Z_OUT zur Steuerungseinheit 2 gesendet werden. Verarbeitete Positionswerte P_OUT und verarbeitete Zusatzdatenwerte Z_OUT sind dann in einem Datenpaket zusammengefasst. In diesem Fall entspricht der Positionsanforderungsbefehl P_RQ der Steuerungsschnittstelle 21einem Datenanforderungsbefehl D_RQ der Messgeräteschnittstelle 20. Somit können die Steuerungsschnittstelle 21 und die Messgeräteschnittstelle 20 auch gleiche Schnittstellen sein. Dies gilt um übrigen auch für die weiteren Ausführungsbeispiele.

Der Positionsanforderungsbefehl P_RQ kann aus einer beliebigen Anzahl von Datenbits bestehen, es kann aber auch bereits eine Signalflanke als Positionsanforderungsbefehl interpretiert werden, oder, wie bei der in der Automatisierungstechnik bekannten SSI-Schnittstelle, das Einsetzen eines Taktsignals, das gleichzeitig zum Synchronisieren der Übertragung des verarbeiteten Positionswerts P_OUT dient.

Sowohl die Steuerungsschnittstelle 21, als auch die Messgeräteschnittstelle 22 sind für hohe Datenübertragungsraten ausgelegt, so dass eine schnelle Übertragung der verarbeiteten Positionswerte P_OUT zur Steuerungseinheit 2 ermöglicht wird. Dadurch ist gewährleistet, dass der Steuerungseinheit 2 zur Regelung von Antrieben in rascher Folge aktuelle Positionswerte als Istwerte für die Regelkreise zur Verfügung gestellt werden können.

Der Datenanforderungseinheit 32 sind Positionsanforderungsbefehle P_RQ, die von der Steuerungseinheit 2 über die Steuerungsschnittstelle 21 bei der Kommunikationseinheit 30 eintreffen, zugeführt. Sie ist geeignet ausgestaltet, Positionsanforderungsbefehle P_RQ zu identifizieren und unmittelbar auf das Eintreffen eines solchen Befehls folgend einen Datenanforderungsbefehl D_RQ über die Messgeräteschnittstelle 20 an die Positionsmesseinrichtung 1 auszugeben.

Datenpakete D, die als Folge eines Datenanforderungsbefehls D_RQ bei der Messgeräteschnittstelle 20 eintreffen, sind der Verarbeitungseinheit 34 zugeführt. Diese leitet den in den Datenpaketen D jeweils enthaltenen Positionswert P (und ggf. den Zusatzdatenwert Z) unmittelbar als verarbeiteten Positionswert P_OUT (und ggf. verarbeiteten Zusatzdatenwert Z_OUT) an die Steuerungsschnittstelle 21 weiter, die diesen wiederum an die Steuerungseinheit 2 ausgibt. Außerdem speichert sie (ggf. nach weiterer Verarbeitung) den Zusatzdatenwert Z in der Speichereinheit 36 ab, wo er als gespeicherter Zusatzdatenwert Z_MEM für die Ausgabe über die Zusatzschnittstelle 22 zur Verfügung steht. Da im laufenden Betrieb von der Steuerungseinheit 2 zyklisch Positionswerte P von der Positionsmesseinrichtung 1 angefordert werden, ist auf diese Weise in der Speichereinheit 36 stets ein hinreichend aktueller gespeicherter Zusatzdatenwert Z_MEM vorhanden. Umfasst das Datenpaket D mehrere Zusatzinformationen Z, so werden diese in der Speichereinheit 36 in verschiedenen Speicherbereichen gespeichert, ggf. mit einer Kennzeichnung der Art der Zusatzinformation, die eine Zuordnung/Unterscheidung ermöglicht.

Um der Zusatzeinheit 3 auch in Zeitperioden, in denen keine zyklische Anforderung von Positionswerten P stattfindet, aktuelle Zusatzdatenwerte Z zur Verfügung zu stellen, kann vorgesehen sein, dass von der Datenanforderungseinheit 32 in bestimmten Zeitabständen auch ohne Positionsanforderungsbefehl P_RQ neue Zusatzdatenwerte Z angefordert werden. Die Zeitabstände können sich nach der Änderungsgeschwindigkeit der Zusatzdatenwerte Z richten. Handelt es sich beispielsweise bei den Zusatzdatenwerten Z um Temperaturwerte eines Temperatursensors, so können die Zeitabstände einige Sekunden betragen, etc.

Die Ausgabe des in der Speichereinheit 36 befindlichen gespeicherten Zusatzdatenwerts Z_MEM erfolgt mit Vorteil auf Anforderung von der Zusatzeinheit 3 mittels eines Zusatzdatenanforderungsbefehls Z_RQ. Die Ausgabe des gespeicherten Zusatzdatenwerts Z_MEM ist somit von der Abfrage des Zusatzdatenwerts Z (in Verbindung mit dem Positionswert P) von der Positionsmesseinrichtung 1 entkoppelt.

Aus der Sicht der Steuerungseinheit 2 und der Zusatzeinheit 3 ist nicht erkennbar, ob sie entsprechend dem Stand der Technik jeweils direkt mit der Positionsmesseinrichtung 1 bzw. dem Sensor 4 verbunden sind, oder ob eine erfindungsgemäße Vorrichtung 10 zum Einsatz kommt. Somit erlaubt eine erfindungsgemäße Vorrichtung den Anschluss von fortschrittlichen Positionsmesseinrichtungen 1, deren Schnittstellen die Übertragung von Datenpaketen D mit Positionswerten P und Zusatzdatenwerten Z unterstützen, an herkömmliche Steuerungseinheiten 2 und Zusatzeinheiten 3, die jeweils nur entweder die Abfrage von Positionswerten P oder die Abfrage von Zusatzdatenwerten Z über eine direkte Kabelverbindung beherrschen. Hinzu kommt der Vorteil, dass für die Hauptverbindungsstrecke a zwischen der Positionsmesseinrichtung 1 und der Vorrichtung 10 ein einziges Kabel mit nur wenigen Adern ausreicht.

Befehlsgesteuerte Schnittstellen, also Schnittstellen, bei denen eine Datenübertragung stets durch einen Befehl (z.B. Positionsanforderungsbefehl P_RQ oder Datenanforderungsbefehl D_RQ) initiiert wird, werden in der Praxis bevorzugt eingesetzt. In einer vereinfachten Variante dieses Ausführungsbeispiels kann aber auf die Datenanforderungseinheit 32 verzichtet werden, nämlich dann, wenn die Messgeräteschnittstelle 20 so gestaltet ist, dass auch ohne Datenanforderungsbefehl D_RQ kontinuierlich Datenpakete D empfangen werden, d.h. die Positionsmesseinrichtung auch ohne einen Datenanforderungsbefehl D_RQ zyklisch Datenpakete D sendet. Ebenso kann die Steuerungsschnittstelle 21 so ausgestaltet sein, dass auch ohne Positionsanforderungsbefehl P_RQ verarbeitete Positionswerte P_OUT ausgeben werden, sobald sie in der Verarbeitungseinheit 34 zur Verfügung stehen.

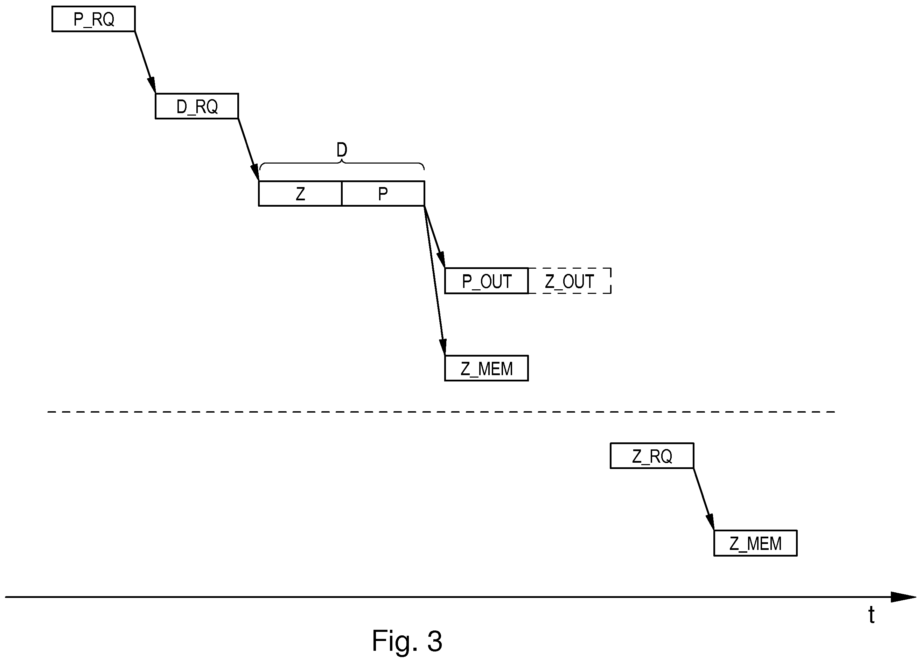

Figur 3 zeigt ein Daten-Zeit-Diagramm zur in Figur 2 dargestellten Ausführungsform zur Verdeutlichung des der Vorrichtung 10 zugrundeliegenden Verfahrens.

Trifft ein Positionsanforderungsbefehl P_RQ von der Steuerungseinheit 2 bei der Vorrichtung 10 ein, so wird von der Datenanforderungseinheit 32 ein Datenanforderungsbefehl D_RQ an die Positionsmesseinrichtung 1 geschickt. Diese schickt als Antwort ein Datenpaket D, das einen Positionswert P und einen Zusatzdatenwert Z umfasst, an die Vorrichtung 10. Der Positionswert P wird in der Verarbeitungseinheit 34 verarbeitet und der verarbeitete Positionswert P_OUT (und ggf. der verarbeitete Zusatzdatenwert Z_OUT) als Antwort auf den Positionsanforderungsbefehl P_RQ an die Steuerungseinheit 2 gesendet. Unabhängig davon speichert die Verarbeitungseinheit 34 den Zusatzdatenwert Z in der Speichereinheit 36. Auch dieser kann, analog zum Positionswert P, vor dem Speichern verarbeitet werden.

Trifft ein Zusatzdatenanforderungsbefehl Z_RQ bei der Vorrichtung 10 ein, so wird der in der Speichereinheit 36 gespeicherte Zusatzdatenwert Z_MEM an die Zusatzeinheit 3 gesendet. Wie durch die gestrichelte Linie verdeutlicht, ist dieser Vorgang vollkommen unabhängig von der Positionsdatenanforderung der Steuerungseinheit 2.

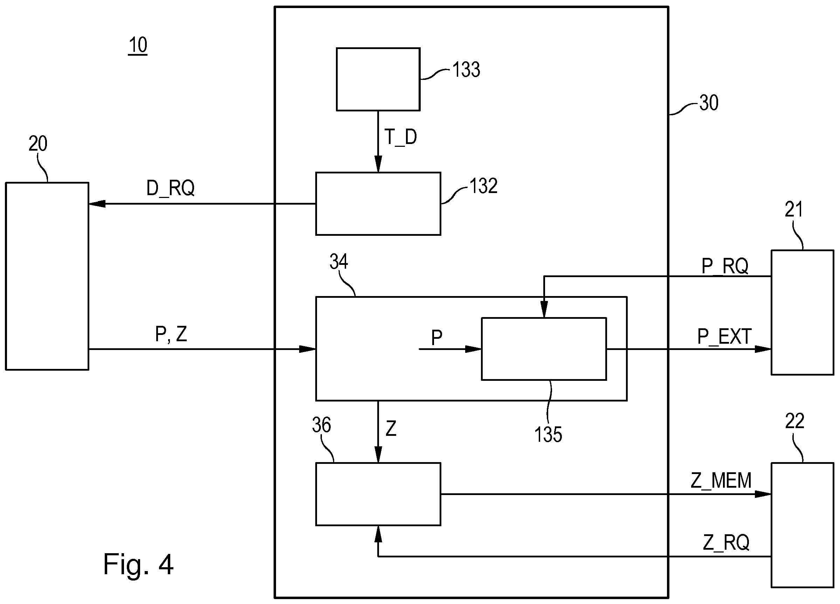

Figur 4 zeigt ein Blockdiagramm einer weiteren Ausführungsform einer erfindungsgemäßen Vorrichtung 10. Funktionseinheiten, die bereits anhand der vorhergehenden Figuren beschrieben wurden, tragen das gleiche Bezugszeichen.

Die Datenanforderungseinheit 132 ist in diesem Ausführungsbeispiel geeignet ausgestaltet, um in gleichmäßigen Zeitabständen T_D Datenanforderungsbefehle D_RQ an die Positionsmesseinrichtung 1 zu senden und damit Datenpakete anzufordern, die jeweils einen Positionswert P und einen Zusatzdatenwert Z umfassen. Die Zeitabstände T_D werden von einem Taktgenerator 133 vorgegeben und sind mit Vorteil möglichst kurz zu wählen.

Die Datenpakete D sind der Verarbeitungseinheit 34 zugeführt, die Zusatzdatenwerte Z in der Speichereinheit 36 speichert und Positionswerte P an eine Extrapolationseinheit 135 weiterleitet, der weiter die Positionsanforderungsbefehle P_RQ zugeführt sind, die über die Steuerungsschnittstelle 21 von der Steuerungseinheit 2 eintreffen. In der Extrapolationseinheit 135 ist aus den wenigstens zwei aktuellsten Positionswerten P, dem bekannten Zeitabstand T_D zwischen den Anforderungen dieser Positionswerte P, sowie dem Zeitpunkt des Eintreffens des Positionsanforderungsbefehls P_RQ, ein extrapolierter Positionswert P_EXT berechenbar. Dieser entspricht weitgehend der tatsächlichen Position der Positionsmesseinrichtung 1 zum Zeitpunkt des Eintreffens des Positionsanforderungsbefehls P_RQ bei der Vorrichtung 10. Der zeitliche Bezug zwischen den Positionswerten P und dem Positionsanforderungsbefehl P_RQ kann beispielsweise durch eine Messung einer Zeitspanne T_RQ zwischen dem Senden des Datenanforderungsbefehls D_RQ, der zur Messung des aktuellsten Positionswerts P geführt hat, und dem Eintreffen des Positionsanforderungsbefehls P_RQ hergestellt werden. Da die für die Berechnung benötigte Zeitspanne gegenüber der Zeit, die für eine tatsächliche Anforderung eines Positionswerts P über die Messgeräteschnittstelle 20 von der Positionsmesseinrichtung 1 benötigt wird, vernachlässigbar kurz ist, steht durch diese Vorgehensweise praktisch verzögerungsfrei ein verarbeiteter Positionswert (der extrapolierte Positionswert P_EXT) zur Verfügung. Aus diesem Grund ist diese Ausführungsform besonders geeignet für Steuerungsschnittstellen 21, die eine kurze Reaktionszeit verlangen, d.h. nur eine kurze Verzögerungszeit zwischen dem Senden eines Positionsanforderungsbefehls P_RQ und dem Empfangen des Positionswerts P_EXT tolerieren.

Die Genauigkeit der Extrapolation ist im Wesentlichen von der Anzahl der Positionswerte P abhängig, die für die Berechnung herangezogen werden. So sind mit der Verwendung der zwei aktuellsten Positionswerte P bereits gute Ergebnisse erzielbar, wenn eine weitgehend konstante Geschwindigkeit (und damit eine konstante Änderungsgeschwindigkeit der Positionswerte P) vorliegt. Die Verwendung von drei oder mehr Positionswerten P erlaubt auch die Erfassung von beschleunigten Bewegungen und ist deshalb besonders vorteilhaft. Ebenso ist es vorteilhaft, bei der Verwendung von mehr als drei Positionswerten P aktuellere Werte höher zu gewichten als ältere.
Auch in Bezug auf die Zusatzdatenwerte Z ist diese Ausführungsform besonders vorteilhaft, da durch die kontinuierliche und von Positionsanforderungsbefehlen P_RQ unabhängige Anforderung von Datenpaketen D stets aktuelle gespeicherte Zusatzdatenwerte Z_MEM in der Speichereinheit 36 vorliegen.

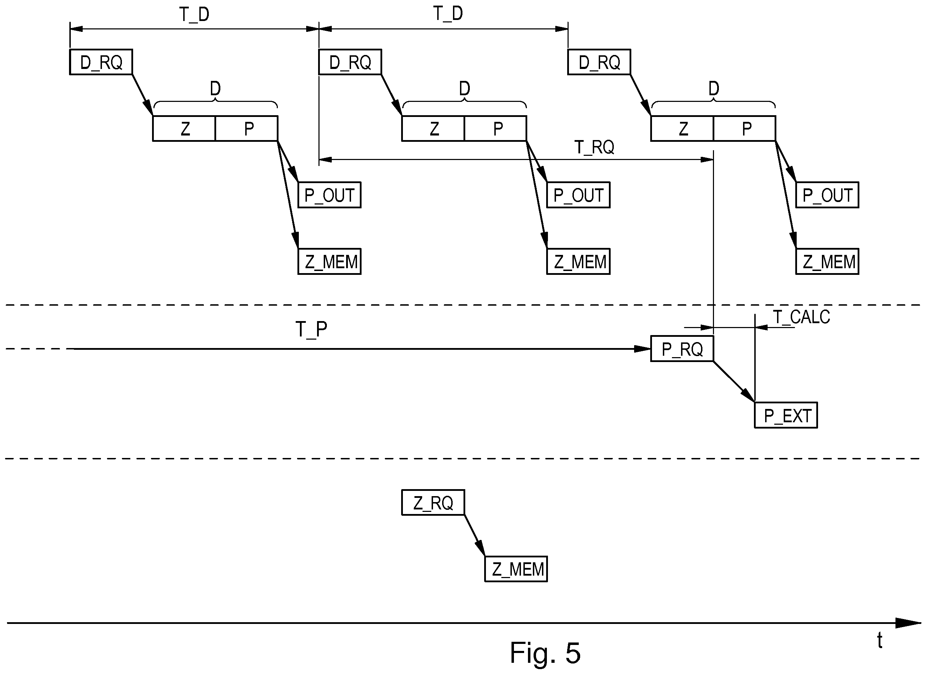

Figur 5 zeigt ein Daten-Zeit-Diagramm zur Verdeutlichung der Funktion des Ausführungsbeispiels von Figur 4. Das Diagramm ist in drei durch gestrichelte Linien voneinander getrennte Bereiche unterteilt, die Funktionsgruppen definieren, die weitgehend unabhängig voneinander ausgeführt werden.

Der obere Bereich zeigt die kontinuierlich ablaufende zyklische Datenanforderung. Hierfür werden in konstanten Zeitabständen T_D von der Datenanforderungseinheit 132 Datenanforderungsbefehle D_RQ an die Positionsmesseinrichtung 1 gesendet. Datenpakete D, die Positionswerte P und Zusatzdatenwerte Z umfassen, sind der Verarbeitungseinheit 34 zugeführt, die Positionswerte P an die Extrapolationseinheit 135 weiterleitet und Zusatzdatenwerte Z in der Speichereinheit 36 speichert.

Im mittleren Bereich ist eine Positionsdatenanforderung dargestellt. Hier sendet die Steuerungseinheit 2 einen Positionsanforderungsbefehl P_RQ an die Vorrichtung 10. Dieser Befehl wird, abweichend zum vorhergehenden Ausführungsbeispiel, der Extrapolationseinheit 135 zugeführt. Diese extrapoliert aus zwei oder mehreren der aktuellsten Positionswerte P einen extrapolierten Positionswert P_EXT und gibt ihn als verarbeiteten Positionswert an die Steuerungseinheit 2 aus. Die Zeitspanne T_CALC, die die Extrapolationseinheit 135 für die Berechnung des extrapolierten Positionswerts P_EXT benötigt, ist gegenüber dem Zeitabstand T_D zwischen zwei Positionsanforderungen vernachlässigbar kurz.

Da der Zeitabstand T_P zwischen zwei Positionsanforderungen mit Vorteil wesentlich länger als der Zeitabstand T_D zwischen zwei Datenanforderungen, ist lediglich der Ablauf einer Positionsanforderung dargestellt.
Im unteren Bereich des Diagramms ist eine Zusatzdatenanforderung dargestellt, also das Senden eines Zusatzdatenanforderungsbefehls Z_RQ von der Zusatzeinheit 3 an die Vorrichtung 10 und das darauffolgende Senden des gespeicherten Zusatzdatenwertes Z_MEM von der Vorrichtung 10 an die Zusatzeinheit 3.

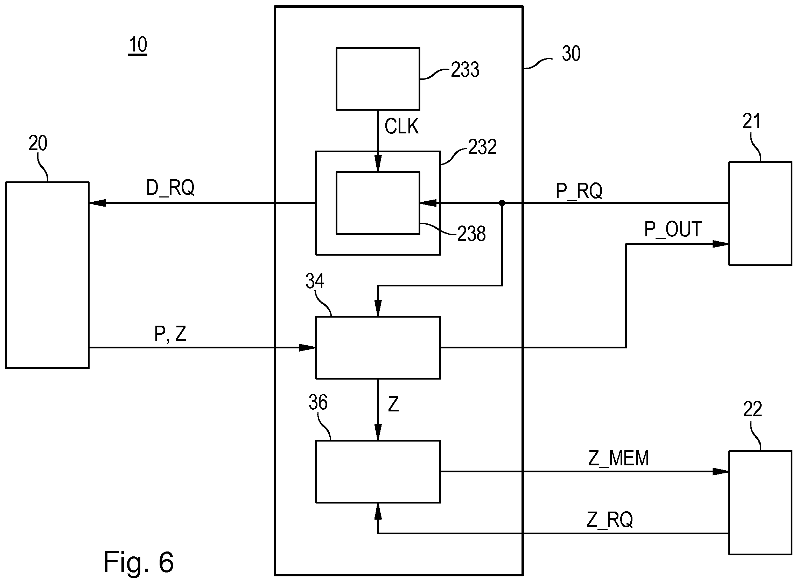

Figur 6 zeigt ein Blockdiagramm einer weiteren Ausführungsform einer erfindungsgemäßen Vorrichtung 10. Diese Ausführungsform basiert auf der Erkenntnis, dass Positionsmesseinrichtungen 1, die dafür eingesetzt werden, Positionsistwerte für Regelkreise von Antriebsmotoren zu liefern, während des Betriebs zyklisch, also in konstanten Zeitabständen, abgefragt werden. Dies ermöglicht es, die Zeitpunkte des Eintreffens von Positionsanforderungsbefehlen P_RQ vorherzusagen, was wiederum ermöglicht, bereits vor dem Eintreffen eines Positionsanforderungsbefehls P_RQ via Datenanforderungsbefehl D_RQ einen Positionswert P (zusammen mit einem Zusatzdatenwert Z) anzufordern. Auf diese Weise steht der verarbeitete Positionswert P_OUT bereits zur Verfügung, wenn ein Positionsanforderungsbefehl P_RQ eintrifft.

Die Kommunikationseinheit 30 umfasst in diesem Ausführungsbeispiel neben der Verarbeitungseinheit 34 und der Speichereinheit 36 eine Datenanforderungseinheit 232 mit einer Synchronisationseinheit 232.

Der Synchronisationseinheit 232 sind Positionsanforderungsbefehle P_RQ zugeführt, die von der Steuerungseinheit 2 bei der Vorrichtung 10 eintreffen. Sie ist geeignet ausgestaltet, um den zeitlichen Abstand zwischen zwei Positionsanforderungsbefehlen P_RQ zu messen und daraus die Zeitpunkte zu ermitteln, zu denen die Datenanforderungseinheit 232 Datenanforderungsbefehle D_RQ an die Positionsmesseinrichtung 1 senden muss, so dass Datenpakete D rechtzeitig bei der Verarbeitungseinheit 34 eintreffen, um bei Eintreffen eines Positionsanforderungsbefehls P_RQ unmittelbar einen aktuellen verarbeiteten Positionswert P_OUT zur Steuerungseinheit 2 senden zu können.

Auch diese Ausführungsform ist also geeignet für Steuerungsschnittstellen 21, die eine geringe Verzögerungszeit zwischen dem Senden eines Positionsanforderungsbefehls P_RQ und dem Empfang eines verarbeiteten Positionswerts P_OUT tolerieren.

Neben der Synchronisationseinheit 232 sind die Positionsanforderungsbefehle P_RQ auch der Verarbeitungseinheit 34 zugeführt, um die Ausgabe des aktuellen verarbeiteten Positionswerts P_OUT zu initiieren.

Das Zeitraster für die Zeitmessung wird der Synchronisationseinheit 238 von einem Taktgenerator 233 in Form eines Taktsignals CLK zur Verfügung gestellt.

Im nicht synchronisierten Zustand, also bevor die Synchronisationseinheit 238 die genauen Zeitpunkte für die Anforderung von Datenpaketen D kennt, kann die Datenanforderungseinheit 232 in geeignet kurzen Zeitabständen neue Datenpakete D anfordern, so dass zum einen in der Verarbeitungseinheit 34 stets hinreichend aktuelle verarbeitete Positionswerte P_OUT für die Ausgabe an die Steuerungseinheit 2 vorliegen und zum anderen auch die Speichereinheit 36 durch aktuelle Zusatzdatenwerte Z aktualisiert wird.

Wie schon in den vorherigen Ausführungsbeispielen erfolgt die Anforderung und das Senden von gespeicherten Zusatzdatenwerten Z_MEM von und zur der Zusatzeinheit 3 unabhängig von der Anforderung von verarbeiteten Positionswerten P_OUT.

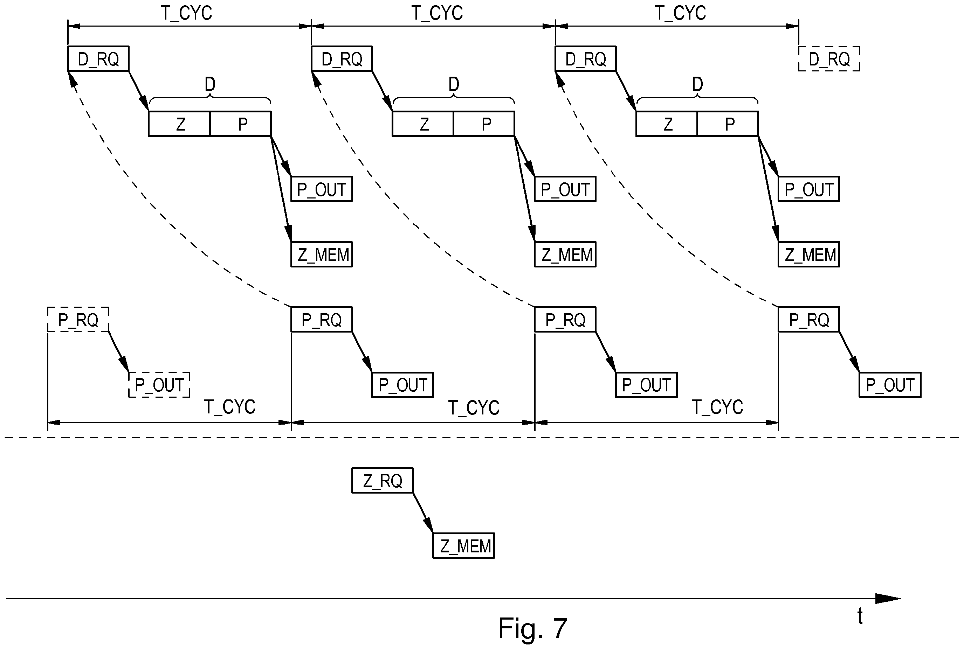

Figur 7 zeigt schließlich ein Daten-Zeit-Diagramm zur Verdeutlichung der Funktion des Ausführungsbeispiels von Figur 6.

Im oberen Bereich ist wiederum die Anforderung von Datenpaketen D mittels Datenanforderungsbefehlen D_RQ dargestellt, die im zeitlichen Abstand einer Zykluszeit T_CYC erfolgt, die der von der Synchronisationseinheit 238 gemessenen Zeit zwischen zwei Positionsanforderungsbefehlen P_RQ entspricht. Die Datenpakete D werden wieder in der Verarbeitungseinheit 34 in Positionswerte P und Zusatzdatenwerte Z aufgeteilt und ggf. verarbeitet.

Die verarbeiteten Positionswerte P_OUT werden bis zum Eintreffen des Positionsanforderungsbefehls P_RQ zwischengespeichert und dann an die Steuerungseinheit 2 ausgegeben.

Die Zusatzdatenwerte Z werden, wie in den vorherigen Ausführungsbeispielen, in der Speichereinheit 36 gespeichert.

Unabhängig von diesen Abläufen werden gespeicherte Zusatzdatenwerte Z_MEM auf einen Zusatzdatenanforderungsbefehl Z_RQ folgend an die Zusatzeinheit 3 ausgegeben.

Die beschriebenen Ausführungsbeispiele dienen dazu, das Grundprinzip der vorliegenden Erfindung zu veranschaulichen. Aus diesem Grund beschreiben sie vorwiegend die Abarbeitung von Positionsanforderungsbefehlen P_RQ, Datenanforderungsbefehlen D_RQ und Zusatzdatenanforderungsbefehlen Z_RQ. Es sei darauf hingewiesen, dass jede der Schnittstellen 20, 21, 22 eine Vielzahl weiterer Befehle aufweisen kann und die Kommunikationseinheit 30 Mittel umfassen kann, diese Befehle abzuarbeiten, insbesondere um Befehle, die bei der Steuerungsschnittstelle 21 und ggf. bei der Zusatzschnittstelle 22 eintreffen, über die Messgeräteschnittstelle 20 an die Positionsmesseinrichtung 1 zu übertragen und Daten, die in Verbindung mit diesen Befehlen bei den Schnittstellen eintreffen, korrekt weiterzuleiten. Weiter kann die Kommunikationseinheit 30 selbst programmierbar ausgestaltet sein, so dass Einstellungen über eine der Schnittstellen 20, 21, 22 vorgenommen werden können.

Ebenso kann die Messgeräteschnittstelle 20 mehrere Datenanforderungsbefehle und ggf. die Steuerungsschnittstelle 21 mehrere Positionsanforderungsbefehle aufweisen, insbesondere um die Anforderung mehrerer unterschiedlicher Zusatzdatenwerte Z zu ermöglichen.

Stehen in der Positionsmesseinrichtung 1 mehrere unterschiedliche Zusatzdatenwerte (beispielsweise Messwerte mehrerer Temperatursensoren) zur Verfügung, so können diese rollierend, also zyklisch hintereinander, zur Vorrichtung 10 übertragen werden.

Für die Realisierung der elektronischen Schaltung der Vorrichtung 10 können programmierbare Bausteine (FPGA) und/oder applikationsspezifische hochintegrierte Bausteine (ASIC), sowie Mikrocontroller zum Einsatz kommen.

Selbstverständlich ist die vorliegende Erfindung nicht auf die beschriebenen Ausführungsbeispiele beschränkt, sie kann vielmehr von einem Fachmann im Rahmen der Ansprüche alternativ ausgeführt werden.

## Patentansprüche

1. Vorrichtung zur Datenübertragung mit einer Messgeräteschnittstelle (20), einer Steuerungsschnittstelle (21) und einer Zusatzschnittstelle (22), die mit einer Kommunikationseinheit (30) verbunden sind,
wobei
• die Messgeräteschnittstelle (20) ausgestaltet ist zum Empfang von Datenpaketen, die einen Positionswert (P) und einen Zusatzdatenwert (Z) umfassen,
• die Datenpakete der Kommunikationseinheit (30) zugeführt sind, die eine Verarbeitungseinheit (34) und eine Speichereinheit (36) umfasst,
• die Verarbeitungseinheit (34) ausgestaltet ist, den Positionswert (P) zu verarbeiten, den verarbeiteten Positionswert (P_OUT) an die Steuerungsschnittstelle (21) auszugeben und den Zusatzdatenwert (Z) in der Speichereinheit (36) zu speichern,
• die Steuerungsschnittstelle (21) ausgestaltet ist zum Empfang von Positionsanforderungsbefehlen (P_RQ) von einer Steuerungseinheit (2) und als Folge des Empfangs zur Ausgabe des verarbeiteten Positionswerts (P_OUT) an die Steuerungseinheit (2) und
• die Zusatzschnittstelle (22) ausgestaltet ist zum Empfang eines Zusatzdatenanforderungsbefehls (Z_RQ) und zur Ausgabe des in der Speichereinheit (36) gespeicherten Zusatzdatenwerts (Z_MEM) an eine Zusatzeinheit (3) als Antwort auf den Empfang des Zusatzdatenanforderungsbefehls (Z_RQ).

2. Vorrichtung nach Anspruch 1, wobei die Kommunikationseinheit (30) weiter eine Datenanforderungseinheit (32, 132, 232) umfasst, von der der Messgeräteschnittstelle (20) zur Anforderung von Datenpaketen Datenanforderungsbefehle (D_RQ) zuführbar sind und die Messgeräteschnittstelle (20) ausgestaltet ist zur Ausgabe der Datenanforderungsbefehle (D_RQ).

3. Vorrichtung nach Anspruch 2, wobei die Steuerungsschnittstelle (21) ausgestaltet ist, nach dem Empfang von Positionsanforderungsbefehlen (P_RQ), die Positionsanforderungsbefehle (P_RQ) der Datenanforderungseinheit (32) zuführbar sind und die Ausgabe eines Datenanforderungsbefehls (D_RQ) vom Eintreffen eines Positionsanforderungsbefehls (P_RQ) abhängig ist.

4. Vorrichtung nach einem der Ansprüche 2 oder 3, wobei die Datenanforderungseinheit (32) unmittelbar nach dem Eintreffen eines Positionsanforderungsbefehls (P_RQ) einen Datenanforderungsbefehl (D_RQ) ausgibt und einen als Folge des Datenanforderungsbefehls (D_RQ) eintreffenden Positionswert (P) verarbeitet und den verarbeiteten Positionswert (P_OUT) an die Steuerungsschnittstelle (21) ausgibt.

5. Vorrichtung nach einem der Ansprüche 2 oder 3, wobei die Datenanforderungseinheit (232) eine Synchronisationseinheit (238) umfasst, mit der bei zyklischem Eintreffen von Positionsanforderungsbefehlen (P_RQ) die Ausgabe von Datenanforderungsbefehlen (D_RQ) mit dem Eintreffen von Positionsanforderungsbefehlen (P_RQ) synchronisierbar ist und wobei Positionsanforderungsbefehle (P_RQ) auch der Verarbeitungseinheit (34) zugeführt sind und von der Verarbeitungseinheit (34) bei Eintreffen eines Positionsanforderungsbefehls (P_RQ) unmittelbar der zuletzt verarbeitete Positionswert (P_OUT) ausgebbar ist.

6. Vorrichtung nach Anspruch 2, wobei von der Datenanforderungseinheit (132) in gleichmäßigen Zeitabständen (T_D) Datenanforderungsbefehle (D_RQ) an die Messgeräteschnittstelle (20) ausgebbar sind und die Verarbeitungseinheit (34) weiter eine Extrapolationseinheit (135) umfasst, der die Positionswerte (P) und die Positionsanforderungsbefehle (P_RQ) zugeführt sind und die ausgestaltet ist, um aus den wenigstens zwei aktuellsten Positionswerten (P), dem bekannten Zeitabstand (T_D) zwischen dem Eintreffen der Positionswerte (P), sowie dem Zeitpunkt des Eintreffens des Positionsanforderungsbefehls (P_RQ), einen extrapolierten Positionswert (P_EXT) zu berechnen, der als verarbeiteter Positionswert (P_OUT) an die Steuerungsschnittstelle (21) ausgebbar ist.

7. Verfahren zur Datenübertragung mit einer Vorrichtung umfassend eine Messgeräteschnittstelle (20), eine Steuerungsschnittstelle (21) und eine Zusatzschnittstelle (22), die mit einer Kommunikationseinheit (30) verbunden sind,
wobei
• Datenpakete, die einen Positionswert (P) und einen Zusatzdatenwert (Z) umfassen, von der Messgeräteschnittstelle (20) empfangen und der Kommunikationseinheit (30) zugeführt werden, die eine Verarbeitungseinheit (34) und eine Speichereinheit (36) umfasst,
• von der Verarbeitungseinheit (34) der Positionswert (P) verarbeitet und als verarbeiteter Positionswert (P_OUT) an die Steuerungsschnittstelle (21) ausgegeben wird und der Zusatzdatenwert (Z) in der Speichereinheit (36) gespeichert wird,
• der verarbeitete Positionswert (P_OUT), nach Empfang von Positionsanforderungsbefehlen (P_RQ) aus einer Steuerungseinheit (2), von der Steuerungsschnittstelle (21) an die Steuerungseinheit (2) ausgegeben wird und
• der in der Speichereinheit (36) gespeicherte Zusatzdatenwert (Z_MEM) über die Zusatzschnittstelle (22) an eine Zusatzeinheit (3) ausgegeben wird, wenn ein Zusatzdatenanforderungsbefehl (Z_RQ) von der Zusatzschnittstelle (22) empfangen wird.

8. Verfahren nach Anspruch 7, wobei die Kommunikationseinheit (30) weiter eine Datenanforderungseinheit (32, 132, 232) umfasst, von der der Messgeräteschnittstelle (20) zur Anforderung von Datenpaketen Datenanforderungsbefehle (D_RQ) zugeführt werden und die Messgeräteschnittstelle (20) die Datenanforderungsbefehle (D_RQ) ausgibt.

9. Verfahren nach Anspruch 8, wobei die von der Steuerungsschnittstelle (21) empfangene Positionsanforderungsbefehle (P_RQ) der Datenanforderungseinheit (32) zugeführt werden und die Ausgabe eines Datenanforderungsbefehls (D_RQ) vom Eintreffen eines Positionsanforderungsbefehls (P_RQ) abhängig ist.

10. Verfahren nach einem der Ansprüche 8 oder 9, wobei die Datenanforderungseinheit (32) unmittelbar nach dem Eintreffen eines Positionsanforderungsbefehls (P_RQ) einen Datenanforderungsbefehl (D_RQ) ausgibt und einen als Folge des Datenanforderungsbefehls (D_RQ) eintreffenden Positionswert (P) verarbeitet und den verarbeiteten Positionswert (P_OUT) an die Steuerungsschnittstelle (21) ausgibt.

11. Verfahren nach einem der Ansprüche 8 oder 9, wobei die Datenanforderungseinheit (232) eine Synchronisationseinheit (238) umfasst, die bei zyklischem Eintreffen von Positionsanforderungsbefehlen (P_RQ) die Ausgabe von Datenanforderungsbefehlen (D_RQ) mit dem Eintreffen von Positionsanforderungsbefehlen (P_RQ) synchronisiert und wobei Positionsanforderungsbefehle (P_RQ) auch der Verarbeitungseinheit (34) zugeführt werden und die Verarbeitungseinheit (34) bei Eintreffen eines Positionsanforderungsbefehls (P_RQ) unmittelbar den letzten verarbeiteten Positionswert (P_OUT) ausgibt.

12. Verfahren nach Anspruch 8, wobei von der Datenanforderungseinheit (132) in gleichmäßigen Zeitabständen (T_D) Datenanforderungsbefehle (D_RQ) an die Messgeräteschnittstelle (20) ausgegeben werden und die Verarbeitungseinheit (34) weiter eine Extrapolationseinheit (135) umfasst, der die Positionswerte (P) und die Positionsanforderungsbefehle (P_RQ) zugeführt werden und die ausgestaltet ist, um aus den wenigstens zwei aktuellsten Positionswerten (P), dem bekannten Zeitabstand (T_D) zwischen dem Eintreffen der Positionswerte (P), sowie dem Zeitpunkt des Eintreffens des Positionsanforderungsbefehls (P_RQ), einen extrapolierten Positionswert (P_EXT) zu berechnen, der als verarbeiteter Positionswert an die Steuerungsschnittstelle (21) ausgegeben wird.

13. Datenübertragungssystem mit einer Positionsmesseinrichtung (1), einer Steuerungseinheit (2), einer Zusatzeinheit (3) in Verbindung mit einer Vorrichtung (10) nach einem der Ansprüche 1 bis 6, geeignet zur Durchführung eines Verfahrens nach einem der Ansprüche 7 bis 12.

## Claims

1. Apparatus for data transmission having a measuring device interface (20), a control interface (21) and a supplementary interface (22), which are connected to a communication unit (30),
wherein
• the measuring device interface (20) is designed to receive data packets comprising a position value (P) and a supplementary data value (Z),
• the data packets are supplied to the communication unit (30), which comprises a processing unit (34) and a memory unit (36),
• the processing unit (34) is designed to process the position value (P), to output the processed position value (P_OUT) to the control interface (21) and to store the supplementary data value (Z) in the memory unit (36),
• the control interface (21) is designed to receive position request commands (P_RQ) from a control unit (2) and, as a result of the reception, to output the processed position value (P_OUT) to the control unit (2), and
• the supplementary interface (22) is designed to receive a supplementary data request command (Z_RQ) and to output the supplementary data value (Z_MEM) stored in the memory unit (36) to a supplementary unit (3) as a response to the reception of the supplementary data request command (Z_RQ).

2. Apparatus according to Claim 1, wherein the communication unit (30) further comprises a data requesting unit (32, 132, 232), from which data request commands (D_RQ) are suppliable to the measuring device interface (20) to request data packets, and the measuring device interface (20) is designed to output the data request commands (D_RQ) .

3. Apparatus according to Claim 2, wherein the control interface (21) is designed so as, after the reception of position request commands (P_RQ), the position request commands (P_RQ) are suppliable to the data requesting unit (32) and the output of a data request command . (D_RQ) is dependent on the arrival of a position request command (P_RQ).

4. Apparatus according to either of Claims 2 and 3, wherein the data requesting unit (32) outputs a data request command (D_RQ) immediately after the arrival of a position request command (P_RQ) and processes a position value (P) arriving as a result of the data request command (D_RQ) and outputs the processed position value (P_OUT) to the control interface (21).

5. Apparatus according to either of Claims 2 and 3, wherein the data requesting unit (232) comprises a synchronization unit (238) by means of which, when position request commands (P_RQ) arrive cyclically, the output of data request commands (D_RQ) is synchronizable with the arrival of position request commands (P_RQ) and wherein position request commands (P_RQ) are also supplied to the processing unit (34) and, when a position request command (P_RQ) arrives, the most recently processed position value (P_OUT) is immediately outputtable by the processing unit (34).

6. Apparatus according to Claim 2, wherein data request commands (D_RQ) are outputtable to the measuring device interface (20) by the data requesting unit (132) at regular intervals of time (T_D) and the processing unit (34) further comprises an extrapolation unit (135) to which the position values (P) and the position request commands (P_RQ) are supplied and that is designed to calculate from the at least two latest position values (P), the known interval of time (T_D) between the arrival of the position values (P) and the time of arrival of the position request command (P_RQ), an extrapolated position value (P_EXT) that is outputtable to the control interface (21) as a processed position value (P_OUT).

7. Method for data transmission using an apparatus comprising a measuring device interface (20), a control interface (21) and a supplementary interface (22), which are connected to a communication unit (30),
wherein
• data packets comprising a position value (P) and a supplementary data value (Z) are received by the measuring device interface (20) and supplied to the communication unit (30), which comprises a processing unit (34) and a memory unit (36),
• the processing unit (34) processes the position value (P) and outputs it to the control interface (21) as a processed position value (P_OUT), and the supplementary data value (Z) is stored in the memory unit (36),
• the processed position value (P_OUT) is output, following reception of position request commands (P_RQ) from a control unit (2), by the control interface (21) to the control unit (2), and
• the supplementary data value (Z_MEM) stored in the memory unit (36) is output to a supplementary unit (3) via the supplementary interface (22) if a supplementary data request command (Z_RQ) is received by the supplementary interface (22).

8. Method according to Claim 7, wherein the communication unit (30) further comprises a data requesting unit (32, 132, 232) from which data request commands (D RQ) are supplied to the measuring device interface (20) to request data packets, and the measuring device interface (20) outputs the data request commands (D_RQ).

9. Method according to Claim 8, wherein the position request commands (P_RQ) received by the control interface (21) are supplied to the data requesting unit (32) and the output of a data request command (D_RQ) is dependent on the arrival of a position request command (P_RQ).

10. Method according to either of Claims 8 and 9, wherein the data requesting unit (32) outputs a data request command (D_RQ) immediately after the arrival of a position request command (P_RQ) and processes a position value (P) arriving as a result of the data request command (D_RQ) and outputs the processed position value (P_OUT) to the control interface (21).

11. Method according to either of Claims 8 and 9, wherein the data requesting unit (232) has a synchronization unit (238) that, when position request commands (P_RQ) arrive cyclically, synchronizes the output of data request commands (D_RQ) with the arrival of position request commands (P_RQ) and wherein position request commands (P_RQ) are also supplied to the processing unit (34) and, when a position request command (P_RQ) arrives, the processing unit (34) immediately outputs the last processed position value (P_OUT).

12. Method according to Claim 8, wherein data request commands (D_RQ) are output to the measuring device interface (20) by the data requesting unit (132) at regular intervals of time (T_D) and the processing unit (34) further comprises an extrapolation unit (135) to which the position values (P) and the position request commands (P_RQ) are supplied and that is designed to calculate from the at least two latest position values (P), the known interval of time (T_D) between the arrival of the position values (P) and the time of arrival of the position request command (P_RQ), an extrapolated position value (P_EXT) that is output to the control interface (21) as a processed position value.

13. Data transmission system having a position measuring device (1), a control unit (2), a supplementary unit (3) in conjunction with an apparatus (10) according to one of Claims 1 to 6, suitable for performing a method according to one of Claims 7 to 12.

## Revendications

1. Dispositif de transmission de données comprenant une interface d'appareil de mesure (20), une interface de commande (21) et une interface supplémentaire (22), lesquelles sont reliées à une unité de communication (30),
* l'interface d'appareil de mesure (20) étant configurée pour recevoir des paquets de données qui comprennent une valeur de position (P) et une valeur de données supplémentaires (Z),
* les paquets de données étant acheminés à l'unité de communication (30), laquelle comprend une unité de traitement (34) et une unité de mémoire (36),
* l'unité de traitement (34) étant configurée pour traiter la valeur de position (P), délivrer la valeur de position traitée (P_OUT) à l'interface de commande (21) et mémoriser la valeur de données supplémentaires (Z) dans l'unité de mémoire (36),
* l'interface de commande (21) étant configurée pour recevoir des instructions de demande de position (P_RQ) de la part d'une unité de commande (2) et, en conséquence de la réception, pour délivrer la valeur de position traitée (P_OUT) à l'unité de commande (2) et
* l'interface supplémentaire (22) étant configurée pour recevoir une instruction de demande de données supplémentaires (Z_RQ) et pour délivrer la valeur de données supplémentaires (Z_MEM) mémorisée dans l'unité de mémoire (36) à une unité supplémentaire (3) en tant que réponse à la réception de l'instruction de demande de données supplémentaires (Z_RQ).

2. Dispositif selon la revendication 1, l'unité de communication (30) comportant .. en outre une unité de demande de données (32, 132, 232) depuis laquelle des instructions de demande de données (D_RQ) peuvent être acheminées à l'interface d'appareil de mesure (20) en vue de demander des paquets de données et l'interface d'appareil de mesure (20) étant configurée pour délivrer les instructions de demande de données (D_RQ).

3. Dispositif selon la revendication 2, l'interface de commande (21) étant configurée pour, après la réception d'instructions de demande de position (P_RQ), les instructions de demande de position (P_RQ) pouvant être acheminées à l'unité de demande de données (32) et la délivrance d'une instruction de demande de données (D_RQ) étant dépendante de l'arrivée d'une instruction de demande de position (P_RQ).

4. Dispositif selon l'une des revendications 2 ou 3, l'unité de demande de données (32), immédiatement après l'arrivée d'une instruction de demande de position (P_RQ), délivrant une instruction de demande de données (D_RQ) et traitant une valeur de position (P) arrivant en conséquence de l'instruction de demande de données (D_RQ), et délivrant la valeur de position traitée (P_OUT) à l'interface de commande (21).

5. Dispositif selon l'une des revendications 2 ou 3, l'unité de demande de données (232) comportant une unité de synchronisation (238) avec laquelle, lors d'une arrivée cyclique d'instructions de demande de position (P_RQ), la délivrance d'instructions de demande de données (D_RQ) peut être synchronisée avec l'arrivée des instructions de demande de position (P_RQ) et les instructions de demande de position (P_RQ) étant également acheminées à l'unité de traitement (34) et la dernière valeur de position traitée (P_OUT) pouvant être délivrée immédiatement par l'unité de traitement (34) lors de l'arrivée d'une instruction de demande de position (P_RQ).

6. Dispositif selon la revendication 2, des instructions de demande de données (D_RQ) pouvant être délivrées par l'unité de demande de données (132) à des intervalles de temps (T_D) réguliers à l'interface d'appareil de mesure (20) et l'unité de traitement (34) comprenant en outre une unité d'extrapolation (135) à laquelle sont acheminées les valeurs de position (P) et les instructions de demande de position (P_RQ) et qui est configurée pour, à partir des au moins deux valeurs de position (P) les plus actuelles, l'intervalle de temps (T_D) connu entre l'arrivée des valeurs de position (P) et l'instant de l'arrivée de l'instruction de demande de position (P_RQ), calculer une valeur de position extrapolée (P_EXT) qui peut être délivrée en tant que valeur de position traitée (P_OUT) à l'interface de commande (21).

7. Procédé de transmission de données avec un dispositif comprenant une interface d'appareil de mesure (20), une interface de commande (21) et une interface supplémentaire (22), lesquelles sont reliées à une unité de communication (30),
* des paquets de données qui comprennent une valeur de position (P) et une valeur de données supplémentaires (Z) étant reçus par l'interface d'appareil de mesure (20) et acheminés à l'unité de communication (30), laquelle comprend une unité de traitement (34) et une unité de mémoire (36),
* la valeur de position (P) étant traitée par l'unité de traitement (34) et délivrée en tant que valeur de position traitée (P_OUT) à l'interface de commande (21) et la valeur de données supplémentaires (Z) étant mémorisée dans l'unité de mémoire (36),
* la valeur de position traitée (P_OUT), après la réception d'instructions de demande de position (P_RQ) de la part d'une unité de commande (2), étant délivrée par l'interface de commande (21) à l'unité de commande (2) et
* la valeur de données supplémentaires (Z_MEM) mémorisée dans l'unité de mémoire (36) étant délivrée par le biais de l'interface supplémentaire (22) à une unité supplémentaire (3) lorsqu'une instruction de demande de données supplémentaires (Z_RQ) est reçue par l'interface supplémentaire (22).

8. Procédé selon la revendication 7, l'unité de communication (30) comportant en outre une unité de demande de données (32, 132, 232) depuis laquelle des instructions de demande de données (D_RQ) sont acheminées à l'interface d'appareil de mesure (20) en vue de demander des paquets de données et l'interface d'appareil de mesure (20) délivrant les instructions de demande de données (D_RQ).

9. Procédé selon la revendication 8, les instructions de demande de position (P_RQ) reçues par l'interface de commande (21) étant acheminées à l'unité de demande de données (32) et la délivrance d'une instruction de demande de données (D_RQ) étant dépendante de l'arrivée d'une instruction de demande de position (P_RQ).

10. Procédé selon l'une des revendications 8 ou 9, l'unité de demande de données (32), immédiatement après l'arrivée d'une instruction de demande de position (P_RQ), délivrant une instruction de demande de données (D_RQ) et traitant une valeur de position (P) arrivant en conséquence de l'instruction de demande de données (D_RQ), et délivrant la valeur de position traitée (P_OUT) à l'interface de commande (21).

11. Procédé selon l'une des revendications 8 ou 9, l'unité de demande de données (232) comportant une unité de synchronisation (238) qui, lors d'une arrivée cyclique d'instructions de demande de position (P_RQ), synchronise la délivrance d'instructions de demande de données (D_RQ) avec l'arrivée des instructions de demande de position (P_RQ) et les instructions de demande de position (P_RQ) étant également acheminées à l'unité de traitement (34) et l'unité de traitement (34) délivrant immédiatement la dernière valeur de position traitée (P_OUT) lors de l'arrivée d'une instruction de demande de position (P_RQ).

12. Procédé selon la revendication 8, des instructions de demande de données (D_RQ) étant délivrées par l'unité de demande de données (132) à des intervalles de temps (T_D) réguliers à l'interface d'appareil de mesure (20) et l'unité de traitement (34) comprenant en outre une unité d'extrapolation (135) à laquelle sont acheminées les valeurs de position (P) et les instructions de demande de position (P_RQ) et qui est configurée pour, à partir des au moins deux valeurs de position (P) les plus actuelles, l'intervalle de temps (T_D) connu entre l'arrivée des valeurs de position (P) et l'instant de l'arrivée de l'instruction de demande de position (P_RQ), calculer une valeur de position extrapolée (P_EXT) qui peut être délivrée en tant que valeur de position traitée à l'interface de commande (21).

13. Système de transmission de données comprenant un appareil de mesure de position (1), une unité de commande (2), une unité supplémentaire (3) en association avec un dispositif (10) selon l'une des revendications 1 à 6, adapté pour mettre en œuvre un procédé selon l'une des revendications 7 à 12.
